# EUROPÄISCHE PATENTANMELDUNG

(11) **EP 2 386 197 A1**
(43) Veröffentlichungstag der Anmeldung: **16.11.2011**
(21) Anmeldenummer: 11401508.4
(22) Anmeldetag: 06.05.2011
(51) Int. Cl.: A01B 29/00

(54) **Landwirtschaftliche Vorrichtung zum Verfestigen des Bodens**

(30) Priorität: 11.05.2010 DE 102010016874
(71) Anmelder: Amazonen-Werke H. Dreyer GmbH & Co. KG, 49205 Hasbergen (DE)
(72) Erfinder: Markow, Alexander, 04178 Leipzig (DE)

(57) **Zusammenfassung**

Vorrichtung zum Verfestigen des Bodens mittels walzenförmiger und/oder radförmiger, parallel zueinander auf einer Achse angeordneter Werkzeugelemente, die eine im wesentlichen ringförmige, unterbrochene oder ununterbrochene Umfangsfläche haben und von der Achse (3) ausgehende, mit der Umfangsfläche verbundene und/oder zusammenwirkenden Tragarme (4) und/oder Speichen aufweisen. Um eine verbesserte Ausgestaltung der Tragarme (4) und/oder Speichen vorzuschlagen, dass die Tragarme (4) und/oder Speichen als Formteile ausgebildet sind, die vorzugsweise aus abgewinkelt zueinander angeordneten Flächen bestehen.

## Beschreibung

Die Erfindung betrifft eine Vorrichtung zum Verfestigen des Bodens gemäß des Oberbegriffes des Patentanspruches 1.

Eine derartige Vorrichtung zum Verfestigen des Bodens ist beispielsweise durch die DE 20 2009 006 698 U1 bekannt. Diese Vorrichtung ist als sogenannte Federbandwalze ausgebildet. Die Walze weist einen zentralen rohrförmigen Zentralträger auf. Auf diesem Zentralträger sind sich in radialer Richtung erstreckende Speichen angeordnet. Die Speichen weisen an ihren Enden nach außen offene U-förmige Aufnahmen auf. In diesen Aufnahmen ist das so genannte ringförmige Federband, welches als Walzenkörper dient, angeordnet. Die Speichen sind hier als einfache Rohrabschnitte ausgestaltet.

Der Erfindung liegt die Aufgabe zu Grunde, eine verbesserte Ausgestaltung der Tragarme und/oder Speichen vorzuschlagen.

Diese Aufgabe wird erfindungsgemäß dadurch gelöst, dass die Tragarme und/oder Speichen als Formteile ausgebildet sind, die vorzugsweise aus abgewinkelt zueinander angeordneten Flächen bestehen.

Infolge dieser Maßnahme können beispielsweise aus einfachen Flachteilen durch Verformung, wie Abkanten die optimal ausgestalteten Formteile zur Schaffung der Tragarme und/oder Speichen hergestellt werden. Die Form der Formteile lässt sich in einfacher Weise durch auslasern und anschließender Verformung herstellen. Somit lassen sich in einfacher Weise die Tragarme und/oder Speichen an die Erfordernisse der Einsatzbedingungen anpassen.

Eine einfache Ausgestaltung der Speichen und/oder Tragarme lässt sich dadurch erreichen, dass die Tragarme und/oder Speichen aus Blechformteilen bestehen.

Vorteilhafte Formen für die Tragarme und/oder Speichen ergeben sich dadurch, dass die Tragarme und/oder Speichen einen S-, Z- oder U- förmigen oder geschlossenen Querschnitt aufweisen.

Eine Leichtbauweise der Vorrichtung lässt sich in einfacher Weise dadurch erreichen, dass die Tragarme und/oder Speichen in ihren Flächen Aussparungen aufweisen.

Eine vorteilhafte Anordnung der Tragarme und/oder Speichen auf dem Körper, der beispielsweise als Rohrförmigenelement ausgebildet sein kann, ist dadurch zu erreichen, dass die Tragarme und/oder Speichen an einem drehbar angeordneten Zentralträger befestigt sind, dass die Tragarme und/oder Speichen an ihrer dem Zentralträger zugewandten Seite einen Bereich mit einer zu dem Zentralträger zumindest annähernd komplementären Form aufweisen. Eine derartige Ausgestaltung ist besonders dann vorteilhaft, wenn die Tragarme und/oder Speichen durch verschweißen mit dem Zentralträger verbunden werden sollen.

In einer besonderen Ausführungsform ist vorgesehen, dass die Tragarme und/oder Speichen gegenüber der Radialen in Bezug auf die Drehrichtung der Werkzeugelemente nacheilend angeordnet sind. Infolge dieser Maßnahmen wird der Schaufeleffekt der Tragarme und/oder Speichen minimiert. Die Speichen und/oder Tragarme stechen weicher in den Boden ein und können aufgrund ihrer Anwendung gegenüber der Radialen in nacheilender Weise nur noch wenig Boden aufwerfen. Weiterhin wird durch die von der Radialen abweichende Anstellung der Speichen und/oder Tragarme eine Federwirkung der Tragarme und/oder Speichen erreicht. Durch diese Federwirkung, die durch die erfindungsgemäße Anstellung der Speichen und/oder Tragarme erreicht wird, läuft die Walze ruhiger und überträgt nur noch wenige Stöße an die zugeordnete Maschine. Die Gegenwirkung der Speichen und/oder Tragarme passt sich so an den Druck des Bodens bzw. des Gerätes an. Die Belastung der Speichen und oder/Tragarme auf die Oberfläche des zentralen Tragrohres wird so reduziert.

Eine vorteilhafte Anstellung der Speichen und/oder Tragarme zur Radialen wird dadurch erreicht, dass die Nacheilung gegenüber der Radialen, die durch den Schnittpunkt der Längslinie der Tragarme und/oder Speichen mit der Drehachse der Vorrichtung verläuft zwischen 5 und 70°, vorzugsweise zwischen 10 und 50° beträgt.

Um eine Schaufelwirkung zu vermeiden, d.h. dass die Speichen und oder Tragarme nur wenig Boden aufnehmen können, ist vorgesehen, dass die Tragarme und/oder Speichen gegenüber der Radialen nacheilend angewinkelt angeordnet sind.

Damit die Speichen und/oder Tragarme in einfacher Weise das Federband aufnehmen können, ist vorgesehen, dass die Tragarme und/oder Speichen an ihrem freien Ende jeweils eine nach außen offene Aussparung, welche der Aufnahme und Führung der ringförmigen als umlaufender Ring ausgebildete Umfangsfläche dient, aufweisen.

Um die vorteilhafte Wirkung der nacheilend Anstellung der Speichen und/oder Tragarme zur Radialen sicherzustellen, ist vorgesehen, dass die durch die Speichen und/oder Tragarme verlaufende Längsgerade beabstandet zur Drehachse der Vorrichtung und/oder Zentralträgers verläuft, wobei der Abstand mindestens 1 cm, vorzugsweise mehr als 2 cm beträgt.

Weitere Einzelheiten der Erfindung sind der Beispielsbeschreibung und den Zeichnungen zu entnehmen. Hierbei zeigen
- Fig. 1: die als Bodenwalze ausgebildete Vorrichtung zum Verdichten des Bodens in ausschnittsweiser und perspektivischer Darstellung,
- Fig. 2: die Bodenwalze in Seitenansicht,
- Fig. 3: eine Speiche und/der Tragarm im Schnitt III-III,
- Fig. 4: eine weitere als Bodenwalze ausgebildete Vorrichtung zum Verdichten des Bodens in ausschnittsweiser und perspektivischer Darstellung,
- Fig. 5: die Bodenwalze nach Fig. 4 in Seitenansicht,
- Fig. 6: eine Speiche und/der Tragarm nach Fig. 4 im Schnitt IV-IV,
- Fig. 7: eine weitere als Bodenwalze ausgebildete Vorrichtung zum Verdichten des Bodens in ausschnittsweiser und perspektivischer Darstellung,
- Fig. 8: die Bodenwalze nach Fig. 7 in Seitenansicht,
- Fig. 9: eine Speiche und/der Tragarm nach Fig. 7 im Schnitt VII-VII,
- Fig. 10: eine weitere als Bodenwalze ausgebildete Vorrichtung zum Verdichten des Bodens in ausschnittsweiser und perspektivischer Darstellung,
- Fig. 11: die Bodenwalze nach Fig. 10 in Seitenansicht,
- Fig. 12: eine Speiche und/der Tragarm im Schnitt X-X,
- Fig. 13: eine weitere als Bodenwalze ausgebildete Vorrichtung zum Verdichten des Bodens in ausschnittsweiser und perspektivischer Darstellung,
- Fig. 14: die Bodenwalze nach Fig. 13 in Seitenansicht und
- Fig. 15: eine Speiche und/der Tragarm im Schnitt XV-XV.

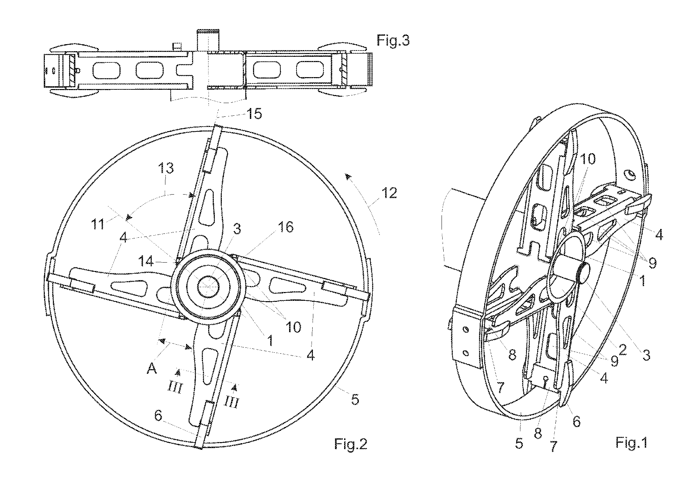

Die Bodenwalze gemäß den Fig. 1 und 2 ist zum Verdichten des Bodens vorgesehen. Die Bodenwalze weist einen rohrförmigen Zentralträger 1 auf. Der Zentralträger 1 trägt an seinen Enden 2 jeweils einen Wellenstummel 3, mittels dem der Zentralträger 1 an einem nicht dargestellten Tragrahmen frei drehbar gelagert ist. Mittels des Tragrahmens ist Bodenwalze an einem vor- oder nach laufendem Gerät in bekannter und daher nicht dargestellter Weise zu befestigen.

Auf dem Zentralträger 1 sind die Tragarme 4 und/oder Speichen angeordnet. Die Tragarme 4 und/oder Speichen tragen jeweils ein ringförmiges Werkzeugelement 5 mit der ununterbrochenen Umfangsfläche. Zur Aufnahme des Ringes 5 weisen die Tragarme 4 und/oder Speichen an ihrem freien Ende 6 jeweils eine nach außen offene Aussparung 7 auf, welche der Aufnahme und Führung des Ringes 5 dient. Die eine offene Aussparung 7 aufweisenden Aufnahme- und/oder Führungselemente 8 zur Führung und/oder Aufnahme des Ringes 5 sind an dem freien Ende 6 der Tragarme 4 und/oder Speichen mittels einer Schweißverbindung befestigt. Dieser Ring 5 besteht aus einem Federband.

Die Tragarme 4 und oder Speichen wirken mit dem Ring 5 zusammen.

Die Tragarme und/oder Speichen 4 sind als Formteile ausgebildet. Sie bestehen aus Blechformteilen. Die Speichen 4 sind ausgelaserte plattenförmige Teile, bei denen anschließend durch abkannten die abgewinkelten zu einander angeordneten Flächen entstanden sind. Die Speichen 4 sind im Querschnitt U-förmig ausgebildet, wie Fig. 1 und 3 zeigen. Weiterhin sind in den Flächen der Speichen 4 die Aussparungen 9 angeordnet.

Die Speichen 4 weisen an ihrer dem Zentralträger 1 zugewandten Seite einen Bereich 10 mit einer zu dem Zentralträger 1 zumindest annähernd komplementären Form auf.

Die Tragarme 4 und/oder Speichen sind gegenüber der Radialen 11 im Bezug auf die Drehrichtung 12 der Werkzeugelemente 4 und 6 der Walze nacheilend angeordnet, wie insbesondere der Fig. 2 zu entnehmen ist. Hierbei beträgt die Nacheilung 13 gegenüber der Radialen 11, die durch den Schnittpunkt 14 der Längslinie 15 der Tragarme 4 und/oder Speichen mit der Drehachse 16 der Vorrichtung verläuft, zwischen 5 und 70°, vorzugsweise zwischen 10 und 50°.

Die nacheilend gegenüber der Radialen 11 angewinkelt angeordneten Tragarme 4 und/oder Speichen sind vorzugsweise aus Federstahl hergestellt.

Die durch die Speichen 4 und oder Tragarme verlaufende Längsgerade 15 verläuft beabstandet zur Drehachse 16 der Vorrichtung und/oder Zentralträger, wobei der Abstand A mindestens 1 cm, vorzugsweise mehr als 2 cm beträgt, wie die Fig. 2 zeigt.

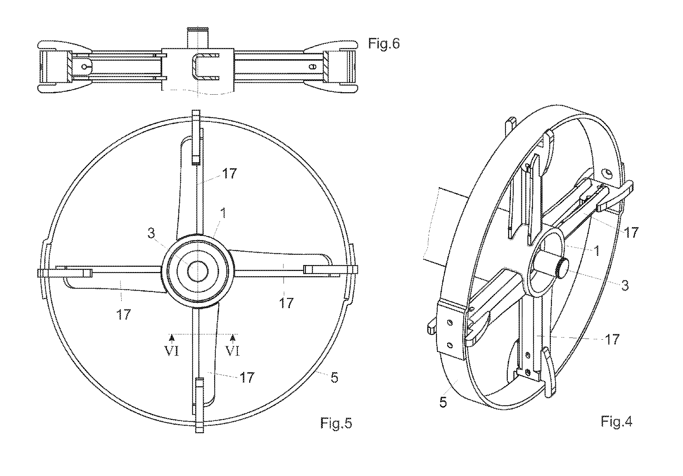

Die Bodenwalze gemäß den Fig. 4 - 6 unterscheidet sich von der Bodenwalze gemäß den Fig. 1 - 3 durch eine andere Ausgestaltung der Speichen und in der Anordnung der Speichen an dem Zentralträger 1. Die Speichen 17 dieser Bodenwalze sind nicht nacheilend gegenüber der Radialen angeordnet. Weiterhin sind die Speichen 17 ebenfalls mittels einer Schweißverbindung an dem Zentralträger 1 angeordnet. In den Flächen der Speichen 17 sind keine Aussparungen angeordnet. Im Querschnitt sind die Speichen 17 ebenfalls U-förmig ausgebildet.

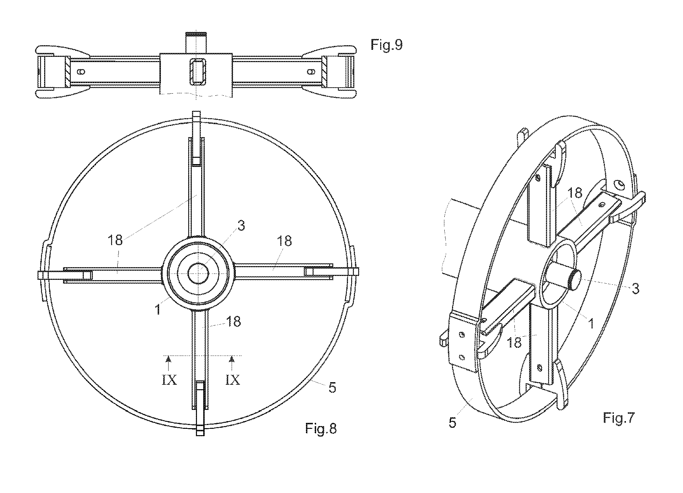

Die Bodenwalze gemäß den Fig. 7 - 9 unterscheidet sich von der Bodenwalze gemäß den Fig. 1 - 3 durch eine andere Ausgestaltung der Speichen und in der Anordnung der Speichen an dem Zentralträger 1. Die Speichen 18 dieser Bodenwalze sind nicht nacheilend gegenüber der Radialen angeordnet. Weiterhin sind die Speichen 18 ebenfalls mittels einer Schweißverbindung an dem Zentralträger 1 angeordnet. In den Flächen der Speichen 18 sind keine Aussparungen angeordnet. Im Querschnitt sind die Speichen 18 als Rechteck ausgebildet, nämlich aus einem Rechteckrohr hergestellt, sie weisen also ein geschlossenes Profil auf.

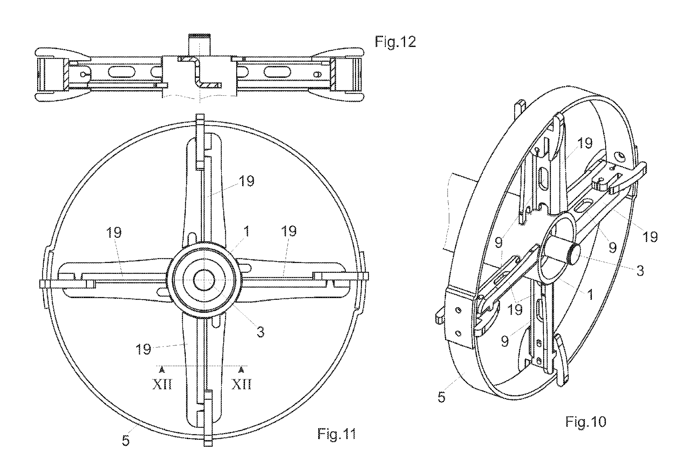

Die Bodenwalze gemäß den Fig. 10 - 12 unterscheidet sich von der Bodenwalze gemäß den Fig. 1 - 3 durch eine andere Ausgestaltung der Speichen und in der Anordnung der Speichen an dem Zentralträger 1. Die Speichen 19 dieser Bodenwalze sind nicht nacheilend gegenüber der Radialen angeordnet. Weiterhin sind die Speichen 19 ebenfalls mittels einer Schweißverbindung an dem Zentralträger 1 angeordnet. In den Flächen der Speichen 19 sind die Aussparungen 9 angeordnet. Im Querschnitt sind die Speichen 19 S-förmig ausgebildet.

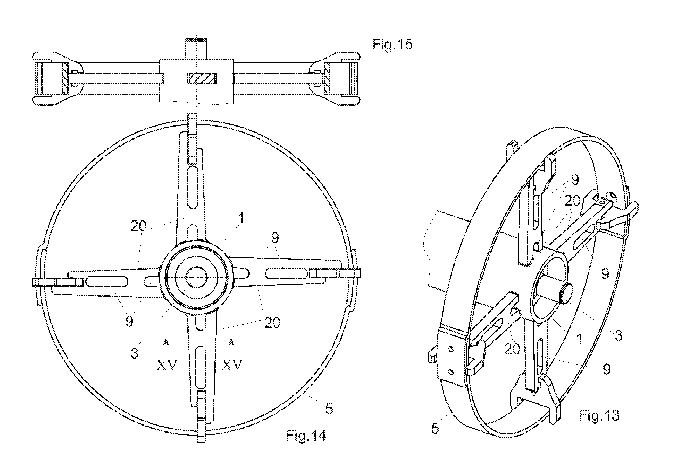

Die Bodenwalze gemäß den Fig. 13 - 15 unterscheidet sich von der Bodenwalze gemäß den Fig. 1 - 3 durch eine andere Ausgestaltung der Speichen und in der Anordnung der Speichen an dem Zentralträger 1. Die Speichen 20 dieser Bodenwalze sind nicht nacheilend gegenüber der Radialen angeordnet. Weiterhin sind die Speichen 20 ebenfalls mittels einer Schweißverbindung an dem Zentralträger 1 angeordnet. In den Flächen der Speichen 20 sind die Aussparungen 9 angeordnet. Die Speichen 20 sind aus Flachmaterial hergestellt.

## Patentansprüche

1. Vorrichtung zum Verfestigen des Bodens mittels walzenförmiger und/oder radförmiger, parallel zueinander auf einer Achse angeordneter Werkzeugelemente, die eine im wesentlichen ringförmige, unterbrochene oder ununterbrochene Umfangsfläche haben und von der Achse ausgehende, mit der Umfangsfläche verbundene und/oder zusammenwirkenden Tragarme und/oder Speichen aufweisen, **dadurch gekennzeichnet, dass** die Tragarme und/oder Speichen (4, 17, 18, 19, 20) als Formteile ausgebildet sind, die vorzugsweise aus abgewinkelt zueinander angeordneten Flächen bestehen.

2. Vorrichtung zum Verfestigen des Bodens nach Anspruch 1, **dadurch gekennzeichnet, dass** die Tragarme (4, 17, 18, 19, 20) und/oder Speichen aus Blechformteilen bestehen.

3. Vorrichtung zum Verfestigen des Bodens nach zumindest einem der vorstehenden Ansprüche, **dadurch gekennzeichnet, dass** die Tragarme und/oder Speichen (4, 17, 18, 19, 20) einen S-, Z-, O- oder U- förmigen Querschnitt aufweisen.

4. Vorrichtung zum Verfestigen des Bodens nach zumindest einem der vorstehenden Ansprüche, **dadurch gekennzeichnet, dass** die Tragarme und/oder Speichen (4, 19, 20) in ihren Flächen Aussparungen (9) aufweisen.

5. Vorrichtung zum Verfestigen des Bodens nach zumindest einem der vorstehenden Ansprüche, **dadurch gekennzeichnet, dass** die Tragarme und/oder Speichen (4, 17, 18, 19, 20) an einem drehbar angeordneten Zentralträger (1) befestigt sind, dass die Tragarme und/oder Speichen (4, 17, 18, 19, 20) an ihrer dem Zentralträger (1) zugewandten Seite einen Bereich (10) mit einer zu dem Zentralträger (1) zumindest annähernd komplementären Form aufweisen.

6. Vorrichtung zum Verfestigen des Bodens nach zumindest einem der vorstehenden Ansprüche, **dadurch gekennzeichnet, dass** die Tragarme und/oder Speichen (4) gegenüber der Radialen (11) in Bezug auf die Drehrichtung (12) der Werkzeugelemente (4, 5) nacheilend angeordnet sind.

7. Vorrichtung zum Verfestigen des Bodens nach zumindest einem der vorstehenden Ansprüche, **dadurch gekennzeichnet, dass** die Nacheilung (13) gegenüber der Radialen (11), die durch den Schnittpunkt (14) der Längslinie (15) der Tragarme und/oder Speichen (4) mit der Drehachse (16) der Vorrichtung verläuft, zwischen 5 und 70°, vorzugsweise zwischen 10 und 50° beträgt.

8. Vorrichtung nach zumindest einem der vorstehenden Ansprüche, **dadurch gekennzeichnet, dass** die Tragarme und/oder Speichen (4) gegenüber der Radialen (11) nacheilend angewinkelt angeordnet sind.

9. Vorrichtung nach zumindest einem der vorstehenden Ansprüche, **dadurch gekennzeichnet, dass** die Tragarme und/oder Speichen (4) an ihrem freien Ende (6) jeweils eine nach außen offene Aussparung (7), welche der Aufnahme und Führung der ringförmigen als umlaufender Ring (5) ausgebildete Umfangsfläche dient, aufweisen.

10. Vorrichtung nach zumindest einem der vorstehenden Ansprüche, **dadurch gekennzeichnet, dass** die durch die Speichen (4) und/oder Tragarme verlaufende Längsgerade (15) beabstandet zur Drehachse (16) der Vorrichtung und/oder Zentralträgers (1) verläuft, wobei der Abstand (A) mindestens 1cm, vorzugsweise mehr als 2 cm beträgt.
